# EUROPEAN PATENT APPLICATION

(11) **EP 4 822 772 A1**
(43) Date of publication of application: **14.10.2026**
(21) Application number: 25886371.1
(22) Date of filing: 16.07.2025
(51) Int. Cl.: H01M 4/36, H01M 4/525, H01M 4/505, C01G 53/50, H01M 4/131, H01M 10/054, H01M 4/02

(54) **POSITIVE ELECTRODE ACTIVE MATERIAL FOR SODIUM SECONDARY BATTERY, METHOD FOR PREPARING SAME, AND SODIUM SECONDARY BATTERY INCLUDING SAME**

(30) Priority: 31.10.2024 KR 20240153075
(71) Applicant: EcoPro BM Co., Ltd, Cheongju-si, Chungcheongbuk-do 28116 (KR)
(72) Inventor: KIM, Da Mo A, Cheongju-si Chungcheongbuk-do 28116 (KR); LEE, Dongwook, Cheongju-si Chungcheongbuk-do 28116 (KR); PARK, A Ram, Cheongju-si Chungcheongbuk-do 28116 (KR); JEON, Yejin, Cheongju-si Chungcheongbuk-do 28116 (KR)
(74) Representative: Beck & Rössig European Patent Attorneys
(86) International application number: PCT/KR2025/010485
(87) International publication number: WO 2026/095263

(57) **Abstract**

One embodiment of the present invention provides a positive electrode active material for a sodium secondary battery, comprising: a composite particle; and a coating layer covering at least a portion of a surface of the composite particle, wherein the composite particle comprises at least one transition metal selected from nickel, iron, and manganese, sodium, and a doping metal, and wherein the coating layer comprises an oxide of a coating transition metal and the doping metal.

## Description

### [Technical Field]

The present invention relates to a positive electrode active material for a sodium secondary battery, a method for preparing the same, and a sodium secondary battery including the same.

### [Background Art]

As the demand for lithium-ion secondary batteries, which have been widely used as energy storage devices in various electronic technology fields, has rapidly increased, sodium-ion secondary batteries have attracted attention as an alternative to lithium, which is an expensive metal.

Since sodium-ion secondary batteries have an operating principle of an intercalation/deintercalation reaction similar to that of lithium-ion secondary batteries, they are one of the next-generation materials having high potential for application to secondary batteries. However, sodium-ion secondary batteries exhibit lower performance in capacity, cycle life characteristics, rate capability, and the like than lithium-ion secondary batteries, making commercialization difficult. Accordingly, the development of a positive electrode active material having high performance is required for commercialization.

As a positive electrode active material for a sodium-ion secondary battery, a layered transition metal oxide having a simple structure, excellent electrochemical performance, and easy synthesis is typically used. Layered transition metal oxides are generally classified into O3-type and P2-type according to their crystal structures. A positive electrode active material based on an O3-type structure has a composition represented by Naₓ(TM)O₂ (2/3 < x < 1.2), and a positive electrode active material based on a P2-type structure has a composition represented by Naₓ(TM)O₂ (x ≤ 2/3). An O3-type layered oxide has a higher energy density than a P2-type layered oxide particle. However, since it undergoes greater structural changes during charging and discharging, resulting in poor cycle stability, it has limitations in commercial application. Specifically, when the O3-type layered oxide positive electrode active material is used at a high voltage, capacity characteristics and cycle life characteristics may deteriorate due to phase transition, and when it is used at a low voltage, there is a problem in that the capacity is low.

In order to improve the above-described problems, active research has been conducted on doping an inactive metal into a positive electrode active material or on coating a surface of an active material particle with a transition metal.

### [Prior Art Documents]

### [Patent Documents]

(Patent Document 1) Korean Patent Publication No. 10-2024-0011635
(Patent Document 2) Chinese Patent Publication No. 117727920

### [Summary of the Invention]

### [Technical Problem]

An object of the present invention is to improve the problem that, when a layered oxide positive electrode active material for a sodium secondary battery is used at a high voltage, capacity characteristics and cycle life characteristics deteriorate due to phase transition, and when it is used at a low voltage, the capacity is low, by simultaneously using a specific doping metal and a coating transition metal. More specifically, the present invention is directed to improving the phase transition problem of the positive electrode active material during charging and discharging at a high voltage by coating composite transition metal particles substituted with a specific doping metal with a specific coating transition metal, and to improving electrical conductivity by forming an oxide of the coating transition metal and the doping metal in a coating layer.

Further, in the present invention, by uniformly distributing the doping metal and the coating transition metal in the coating layer, i) capacity characteristics are improved by the oxide of the coating transition metal in the crystal structure of the coating layer composition, and at the same time, ii) cycle life characteristics are also improved through buffering of volume changes during charging and discharging by the oxide of the doping metal.

Further, in the present invention, the problem that, when a coating layer is formed on a surface of positive electrode active material particles substituted with a specific doping metal, the doping metal does not migrate to the surface of the particles from within the crystal structure or, conversely, migrates excessively, is improved.

### [Technical Solution]

One embodiment of the present invention provides a positive electrode active material for a sodium secondary battery, comprising: a composite particle; and a coating layer covering at least a portion of a surface of the composite particle, wherein the composite particle comprises at least one transition metal selected from nickel, iron, and manganese, sodium, and a doping metal, and wherein the coating layer comprises an oxide of the coating transition metal and the doping metal.

The oxide of a coating transition metal and the doping metal may be a compound represented by the following Chemical Formula 1.

[Chemical Formula 1] (Ca₃₋ₓ·Aₓ)(Co_{4-y}·B_{y})O₉

wherein, in Chemical Formula 1,
A is Na,
B is at least one transition metal element selected from Fe, Ni, and Mn, and
0≤x≤1 and 0≤y≤1.

The coating layer may further comprise an oxide (C2) of the coating transition metal and a carbonate (C3) of the doping metal, wherein the oxide (C1) of the coating transition metal and the doping metal has a Monoclinic crystal structure belonging to the P2 space group, wherein the oxide (C2) of the coating transition metal has a Cubic crystal structure belonging to the Fd-3m space group, and wherein the carbonate (C3) of the doping metal has a Trigonal crystal structure belonging to the 32/m space group.

The coating layer may further comprise an oxide of the coating transition metal and a carbonate of the doping metal, wherein a peak area ratio B/A measured by X-ray diffraction analysis is 0.7 to 1.3.

(A is a peak area of the oxide of the coating transition metal and the doping metal located at 2θ = 37.34 ± 0.5° in the X-ray diffraction analysis, and B is a peak area of the oxide of the coating transition metal located at 2θ = 36.82 ± 0.5° in the X-ray diffraction analysis.)

The coating layer may further comprise an oxide of the coating transition metal and a carbonate of the doping metal, wherein a peak area ratio C/A measured by X-ray diffraction analysis is 0.5 to 1.0.

(A is a peak area of the oxide of the coating transition metal and the doping metal located at 2θ = 37.34 ± 0.5° in the X-ray diffraction analysis, and C is a peak area of the carbonate of the doping metal located at 2θ = 29.40 ± 0.5° in the X-ray diffraction analysis.)

The doping metal may be calcium and substituted into a sodium layer of the composite particle, and the coating transition metal may be cobalt and may be substantially not diffused into the interior of the composite particle.

The doping metal may be provided throughout the composite particle including a center thereof and in the coating layer, may have the highest concentration in the coating layer, and may have substantially the same concentration throughout the composite particle including the center thereof.

The doping metal may be present in an amount of 10 to 30 wt% in the coating layer and in an amount of 70 to 90 wt% in the composite particle, based on the total weight of the doping metal.

The coating layer may have a thickness of 0.05 to 1.5 µm.

The composite particle may be represented by the following Chemical Formula 2.

[Chemical Formula 2] Naₐ₋₂ₓCaₓ[(M_{y}TM_{1-y})]O₂

wherein, in Chemical Formula 2,
TM is at least one selected from Ni, Mn, and Fe,
M is at least one selected from P, Sr, Ba, Ti, Zr, Al, W, Ce, Hf, Ta, Cr, F, Mg, Cr, V, Fe, Zn, Si, Y, Ga, Sn, Mo, Ge, Nd, B, Nb, Gd, and Cu, and
0.80<a<1.20, 0.001≤x≤0.1, 0≤y≤0.1, and 0.9≤1-y≤1.

Another embodiment of the present invention provides a method for preparing a positive electrode active material for a sodium secondary battery, comprising: preparing a composite particle by mixing a precursor of the composite particle, a doping metal compound, and a sodium compound, followed by heat treatment; and forming a coating layer by mixing the prepared composite particle with a coating transition metal compound, followed by heat treatment, wherein the coating layer comprises an oxide of the coating transition metal and the doping metal.

In the forming of the coating layer, the heat treatment may be performed at 300 to 500°C for 2 to 10 hours.

Another embodiment of the present invention provides a positive electrode for a sodium secondary battery, comprising the positive electrode active material.

Another embodiment of the present invention provides a sodium secondary battery using the positive electrode.

### [Advantageous Effects]

According to the present invention, even when doping and coating are simultaneously applied to the positive electrode active material, cycle life characteristics and rate capability may be simultaneously improved without reducing capacity, and electrical conductivity may be improved by forming an oxide of the coating transition metal and the doping metal in the coating layer.

Further, in the present invention, by controlling the concentration of the coating transition metal within a specific design range, (i) the doping metal sufficiently migrates to the surface of the particles from within the crystal structure of the positive electrode active material particles to form a coating layer of an oxide of the coating transition metal and the doping metal, and (ii) the doping metal has the highest concentration in the coating layer and may be substituted so as to have substantially the same concentration throughout the positive electrode active material particles (composite particles), including the center thereof. Accordingly, due to the uniform substitution (doping) of the doping metal in the positive electrode active material particles, the effect of suppressing phase transition during charging and discharging is excellent, cycle life characteristics are improved, and at the same time, electrical conductivity may be improved by the coating layer, and deterioration in capacity characteristics and rate capability may be prevented.

### [Brief Description of Drawings]

FIG. 1A shows results of surface and cross-sectional SEM-EDS (Scanning Electron Microscope-Energy Dispersive X-ray Spectroscopy) analysis of the sodium composite transition metal oxide prepared in Example 1.
FIG. 1B shows results of peak intensity analysis derived from the (003) plane by XRD (X-ray diffraction) analysis of the sodium composite transition metal oxide prepared in Example 1.
FIGS. 2 and 3 show results of SEM-EDS analysis of surfaces of the positive electrode active materials prepared in Examples 1 and 3.
FIG. 4 shows results of cross-sectional EDS line scan Co analysis of the positive electrode active material prepared in Example 1.

### [Mode for Carrying Out the Invention]

The advantages and features of the present invention, and methods for achieving the same, will become apparent with reference to the embodiments described below in detail in conjunction with the accompanying drawings. However, the present invention is not limited to the embodiments disclosed below, but may be embodied in various different forms. These embodiments are provided only so that the disclosure of the present invention will be complete and will fully convey the scope of the invention to those skilled in the art, and the present invention is defined only by the scope of the appended claims.

Unless otherwise defined, all terms (including technical and scientific terms) used herein may be construed as having meanings commonly understood by those skilled in the art to which the present invention pertains. Throughout the specification, when a part is referred to as "including" a component, it means that the part may further include other components unless specifically stated otherwise. In addition, singular forms include plural forms unless the context clearly indicates otherwise.

One embodiment of the present invention provides a positive electrode active material for a sodium secondary battery. The positive electrode active material comprises a composite particle; and a coating layer covering at least a portion of a surface of the composite particle, wherein the composite particle comprises at least one transition metal selected from nickel, iron, and manganese, sodium, and a doping metal, and wherein the coating layer comprises an oxide of a coating transition metal and the doping metal.

The coating transition metal may be a metal different from the transition metal of the composite particle.

In the present invention, by coating the composite particle substituted with the doping metal with a different coating transition metal, the phase transition problem of the positive electrode active material during use at a high voltage may be improved, and electrical conductivity may be improved by forming an oxide containing the doping metal and the coating transition metal in the coating layer. Specifically, the oxide of the coating transition metal and the doping metal may have high electrical conductivity due to a layered structure in which a coating transition metal oxide layer and a doping metal-coating transition metal oxide layer are alternately stacked in the crystal structure.

Specifically, in the crystal structure of the coating layer, (i) the coating transition metal oxide layer has sodium activity because the transition metal is bonded to oxygen, thereby providing additional capacity, and at the same time, (ii) the doping metal-coating transition metal oxide layer exhibits sodium inactivity because the doping metal has a strong bonding force with oxygen, but may also improve cycle stability by buffering volume changes of the sodium-active region in the coating layer during charging and discharging.

As in one embodiment, the oxide of the coating transition metal and the doping metal may be a compound represented by the following Chemical Formula 1.

[Chemical Formula 1] (Ca₃₋ₓ·A₂ₓ)(Co_{4-y}·B_{y})O₉

wherein, in Chemical Formula 1, A is Na, B is at least one transition metal element selected from Fe, Ni, and Mn, and 0≤x≤1 and 0≤y≤1.

Specifically, the compound represented by Chemical Formula 1 may be, for example, at least one selected from Ca₃Co₄O₉, Ca₃(Co_{3.7}Mn_{0.3})O₉, Ca₃(Co_{3.7}Fe_{0.3})O₉, Ca₃(Co_{3.7}Ni_{0.3})O₉, (Ca_{2.7}Na_{0.6})Co₄O₉, (Ca_{2.5}Na)Co₄O₉, (Ca_{2.7}Na_{0.6})(Co_{3.7}Mn_{0.3})O₉, (Ca_{2.7}Na_{0.6})(Co_{3.7}Fe_{0.3})O₉, and (Ca_{2.7}Na_{0.6})(Co_{3.7}Ni_{0.3})O₉, and preferably may be calcium cobalt oxide or Ca₃Co₄O₉.

The calcium cobalt oxide-based compound represented by Chemical Formula 1 has activity with sodium, and thus does not cause a decrease in capacity in a conventional sodium composite particle, may exhibit stable cycle life characteristics by being included in the coating layer, and, in addition, has excellent electronic conductivity and sodium-ion conductivity, thereby improving rate capability through improvement of electrical conductivity. In addition, in the prepared positive electrode active material, during the process upon exposure to air, or after doping with the doping metal (Ca), the doping metal (Ca), which partially substituted sodium sites, may migrate to the surface of the positive electrode to form a carbonate (CaCO₃) of the doping metal. Since the carbonate (CaCO₃) of the doping metal generates CO₂ gas during battery operation, thereby causing deterioration of battery performance, it is important to suppress the carbonation reaction of the doping metal by inducing a reaction between the coating transition metal (Co) and the doping metal (Ca) on the surface of the positive electrode active material.

Specifically, the oxide of the coating transition metal and the doping metal may have a Monoclinic crystal structure belonging to the P2 space group. In particular, Ca₃Co₄O₉ has a structure in which a [CoO₂] layer and a [CoCa₂O₃] layer are alternately stacked in the crystal structure, and may exhibit high electrical conductivity due to such a layered structure. The transition metal oxide (Co-O based) has lithium activity, and thus provides high charge/discharge capacity, whereas the Ca-O based oxide has lithium inactivity because of its strong bonding force, but may improve cycle stability by buffering volume changes of the active material during charging and discharging.

As in one embodiment, the coating layer may further comprise an oxide (C2) of the coating transition metal and a carbonate (C3) of the doping metal.

Specifically, the oxide of the coating transition metal may have a Cubic crystal structure belonging to the Fd-3m space group, and may be, for example, cobalt oxide (Co₃O₄). Since the crystal structure is similar to a spinel crystal structure, sodium ions may move three-dimensionally as in the spinel crystal structure. Accordingly, as compared with the layered structure in the composite particle in which sodium ions can move two-dimensionally, sodium ions may move more smoothly and rapidly in the surface coating layer, thereby reducing capacity deterioration and improving rate capability.

Further, the carbonate of the doping metal may have a Trigonal crystal structure belonging to the 32/m space group, and may be, for example, calcium carbonate (CaCO₃). As described above, since the carbonate (CaCO₃) of the doping metal generates CO₂ gas during battery operation, thereby causing deterioration of battery performance, it is important to suppress the carbonation reaction of the doping metal by inducing a reaction between the coating transition metal (Co) and the doping metal (Ca) on the surface of the positive electrode active material.

As in one embodiment, the positive electrode active material may have a peak area ratio B/A of 0.7 to 1.3 measured by X-ray diffraction analysis. A is a peak area of the oxide (Ca₃Co₄O₉) of the doping metal and the coating transition metal located at 2θ=37.34±0.5° in the X-ray diffraction analysis, and B is a peak area of the oxide (Co₃O₄) of the coating transition metal located at 2θ=36.82±0.5° in the X-ray diffraction analysis.

Specifically, the peak area ratio B/A may be 0.7 to 1.3, 0.8 to 1.2, 0.8 to 1.1, or 0.8 to 1.0. When the peak area ratio B/A is outside the preferred design range, the presence of an excessive cobalt coating layer may act as resistance during intercalation and deintercalation of sodium ions.

As in one embodiment, the positive electrode active material may have a peak area ratio C/A of 0.5 to 1.0 measured by ray diffraction analysis. A is a peak area of the oxide (Ca₃Co₄O₉) of the doping metal and the coating transition metal located at 2θ=37.34±0.5° in the X-ray diffraction analysis, and C is a peak area of the carbonate (CaCO₃) of the doping metal located at 2θ=29.40±0.5° in the X-ray diffraction analysis.

Specifically, the peak area ratio C/A may be 0.5 to 1.0, 0.6 to 1.0, 0.7 to 1.0, or 0.8 to 1.0. When the peak area ratio C/A exceeds the upper limit, the carbonate (CaCO₃) of the doping metal generates CO₂ gas during battery operation, thereby deteriorating battery performance. Conversely, when the peak area ratio C/A is less than the lower limit, the presence of an excessive cobalt coating layer may act as resistance during intercalation and deintercalation of sodium ions, and a large amount of the doping metal (Ca) may migrate to the surface of the positive electrode, which is undesirable.

As in one embodiment, the doping metal may be calcium and may be substituted into a sodium layer of the composite particle.

Specifically, the calcium may be substituted into the sodium layer of the composite particle, and the calcium element may be doped into the sodium layer of the composite particle having an O3 crystal structure. Accordingly, due to the strong bonding force of the Ca-O-based oxide, the O3 crystal structure of the composite particle may be stably maintained, and cycle characteristics and rate capability may be simultaneously improved.

As in one embodiment, the coating transition metal may be cobalt and may substantially not be diffused into the interior of the composite particle.

Specifically, the cobalt may be included in the coating layer and may substantially not be diffused into the interior of the composite particle. For example, in the composite particle, the content of the coating transition metal (cobalt) may be less than 1 at mol%, 0.8 at mol% or less, 0.5 at mol% or less, or 0.3 at mol% or less, and may be 0 at mol% or more or 0.1 at mol% or more, based on the total metals excluding sodium. Accordingly, the proportion of the carbonate of the doping metal (calcium) migrating to the surface may be reduced, and electrical conductivity and electrochemical characteristics may be improved through a calcium cobalt oxide coating.

The doping metal may be provided throughout the composite particle including the center thereof and in the coating layer, may have the highest concentration in the coating layer, and may have substantially the same concentration throughout the composite particle including the center thereof. In the present invention, during the process of coating the surface of the composite particle by mixing the composite particle and a coating material, formation of the coating layer of the oxide of the coating transition metal and the doping metal may be induced by controlling the cobalt concentration of the coating material. Specifically, by providing cobalt at a predetermined concentration, the doping metal uniformly provided within the precursor of the composite particle may migrate to the surface due to the cobalt provided on the surface of the precursor of the composite particle (positive electrode active material), thereby forming the oxide of the coating layer.

Specifically, the doping metal may be included in an amount of 10 to 30 wt%, 10 to 25 wt%, or 15 to 25 wt% in the coating layer, based on the total weight thereof, and may be included in an amount of 70 to 90 wt%, 75 to 90 wt%, or 75 to 85 wt% in the composite particle. When the weight ratio of the doping metal exceeds the upper limit in the coating layer or is less than the lower limit in the composite particle, the substitution amount of the doping metal in the composite particle is low, phase transition may not be suppressed, and cycle life characteristics may deteriorate. Conversely, when the weight ratio of the doping metal is less than the lower limit in the coating layer or exceeds the upper limit in the composite particle, the electrical conductivity of the surface coating layer is low, initial coulombic efficiency (ICE) may deteriorate, and rate capability may deteriorate.

As in one embodiment, the coating layer may have a thickness of 0.05 to 1.5 µm, and, for example, the thickness of the coating layer may be 1.5 µm or less, 1.2 µm or less, or 1 µm or less, and 0.05 µm or more or 0.1 µm or more. Accordingly, the above-described effects may be further improved.

The composite particle may be represented by the following Chemical Formula 2.

[Chemical Formula 2] Naₐ₋₂ₓCaₓ[(M_{y}TM_{1-y})]O₂

wherein, in Chemical Formula 2, TM may be at least one selected from Ni, Mn, and Fe; M may be at least one selected from P, Sr, Ba, Ti, Zr, Al, W, Ce, Hf, Ta, Cr, F, Mg, Cr, V, Fe, Zn, Si, Y, Ga, Sn, Mo, Ge, Nd, B, Nb, Gd, and Cu; and 0.80<a<1.20, 0.001≤x≤0.1, 0≤y≤0.1, and 0.9≤1-y≤1.

The Na is included in an amount of 0.8 to 1.2 moles based on 1 mole of the composite particle oxide, and the composite particle is formed to have an O3 crystal structure. The composite particle has a problem in that the capacity is low when used at a low voltage, and improvement of electrochemical characteristics is required, and the capacity and cycle life characteristics are reduced due to phase transition when used at a high voltage. Accordingly, in the present invention, as described above, by coating the composite particle substituted with calcium with the coating transition metal, cycle life characteristics and rate capability may be improved without reducing capacity.

The TM in the composite particle may comprise Ni, Fe, and Mn in amounts of 0.1 to 0.9 moles each, based on 1 mole of the composite particle oxide, and may comprise, for example, a Ni_{1/3}Fe_{1/3}Mn_{1/3} composition. When Fe is comprised in the composite particle, Fe³⁺ may be oxidized to Fe⁴⁺ at a high voltage, whereby the crystal structure may become unstable. As in the present invention, however, the crystal structure may be stabilized by substituting Ca into the sodium layer.

Meanwhile, the composite particle may comprise a secondary particle in which a plurality of primary particles are aggregated. Here, the coating layer may be formed to cover at least a portion of the primary particles and/or the secondary particle.

One embodiment of the present invention provides a method for preparing the positive electrode active material.

The method comprises: preparing a composite particle by mixing a precursor of the composite particle, a doping metal compound, and a sodium compound, followed by heat treatment; and forming a coating layer by mixing the prepared composite particle with a coating transition metal compound, followed by heat treatment, wherein the coating layer comprises an oxide of the coating transition metal and the doping metal.

First, in the preparing of the composite particle, the precursor of the composite particle may be a transition metal composite hydroxide precursor, and may be prepared through a coprecipitation process commonly used in the art. The transition metal composite hydroxide precursor may comprise a compound represented by the following Chemical Formula 3.

[Chemical Formula 3] [M_{y}TM_{1-y}](OH)₂

wherein, in Chemical Formula 3, TM may be at least one selected from Ni, Mn, and Fe, M may be at least one selected from P, Sr, Ba, Ti, Zr, Al, W, Ce, Hf, Ta, Cr, F, Mg, Cr, V, Fe, Zn, Si, Y, Ga, Sn, Mo, Ge, Nd, B, Nb, Gd, and Cu, and 0≤y≤0.1 and 0.9≤1-y≤1.

The TM in the transition metal composite hydroxide precursor may comprise Ni, Fe, and Mn in amounts of 0.1 to 0.9 moles each based on 1 mole of the precursor, and may comprise, for example, a Ni_{1/3}Fe_{1/3}Mn_{1/3} composition.

The doping metal compound may be a calcium salt and may be, for example, at least one selected from calcium chloride, calcium oxide, calcium carbonate, calcium phosphate, calcium carbide, and calcium hydroxide, and preferably may be calcium carbonate or calcium hydroxide.

The sodium compound may be at least one selected from the group consisting of sodium carbonate (Na₂CO₃), sodium hydroxide (NaOH), sodium nitrate (NaNO₃), sodium acetate (CH₃COONa), and sodium oxalate (Na₂(COO)₂), and preferably may be sodium carbonate (Na₂CO₃), sodium hydroxide (NaOH), or a combination thereof.

The mixing may comprise mixing the precursor of the composite particle and the sodium compound such that Na/M (total metals excluding Na) is 0.8 to 1.2 equivalents, 0.8 to 1.1 equivalents, or 0.95 to 1.05 equivalents. When the amount of the sodium compound is within the above range, the prepared positive electrode active material may have an O3-type layered crystal structure, thereby having a higher energy density, higher air and moisture stability, and being less sensitive to synthesis conditions (temperature, atmosphere, and the like). In addition, within the above sodium content range, battery discharge capacity may be improved, and unreacted residual Na may be minimized.

Further, the mixing may comprise mixing the precursor of the composite particle and the doping metal compound such that Ca/M (total metals excluding Ca) is 0.5 to 5 mol% or 0.5 to 2.5 mol%. When the amount of Ca exceeds the upper limit, the proportion of Ca(OH)₂ or CaCO₃ compounds may increase relative to the proportion of compounds reacting with Co in the coating layer, thereby causing an increase in resistance, a decrease in capacity, and the like. Conversely, when the amount is too small, formation of the Co-Ca-O compound may be insufficient, making it difficult to improve electrochemical performance.

The heat treatment may be performed at a temperature of 700°C to 1,100°C. When the calcination temperature is within the above range, a sufficient reaction between the starting materials may occur, and the doping metal may be uniformly substituted throughout the transition metal composite particle including the center thereof. The heat treatment may preferably be performed at a temperature of 750 to 1,050°C, 800 to 1,000°C, or 850 to 950°C. The calcination may be performed for 5 to 40 hours, 5 to 20 hours, 5 to 18 hours, 8 to 15 hours, or 10 to 14 hours. When the calcination time is within the above range, a highly crystalline positive electrode active material may be obtained, the particle size may be appropriate, and production efficiency may be improved.

The prepared transition metal composite particle may subsequently be subjected to washing, filtration, and drying processes.

Subsequently, the step of forming a coating layer is performed by mixing the prepared composite particle with a coating transition metal compound, followed by heat treatment.

The coating transition metal compound may include a cobalt precursor, and as the cobalt precursor, Co₃O₄, Co(OH)₂, CoOOH, Co(OCOCH₃)₂·4H₂O, Co(NO₃)₂·6H₂O, CoSO₄, CoSO₄·7H₂O, or a combination thereof may be used, and preferably, Co₃O₄ may be used.

The mixing may comprise controlling the concentration of the coating transition metal compound during a process of mixing the composite particle and the coating transition metal compound followed by heat treatment, such that an oxide comprising the doping metal and the coating transition metal forms a coating layer on the surface of the composite particle. Specifically, based on the total number of moles of the composite particle and the coating transition metal compound, the coating transition metal compound may be mixed such that Co/M (where M is the total transition metals excluding sodium in the composite particle) is 0.1 to 5 mol%, followed by heat treatment, or preferably, the coating transition metal compound may be mixed such that Co/M is 0.1 to 4 mol%, 0.3 to 3 mol%, 0.4 to 3 mol%, 0.5 to 3 mol%, or 0.5 to 1 mol%, followed by heat treatment.

As described above, by providing the coating transition metal compound, the coating transition metal may be provided on the surface of the composite particle, and the doping metal uniformly provided throughout the composite particle including the center thereof may migrate to the surface due to the coating transition metal on the surface, whereby the coating layer may be formed. On the other hand, when the amount of the coating transition metal compound is less than the design range, the coating layer may not be readily formed. Conversely, when the amount of the coating transition metal compound exceeds the design range, the doping metal may be excessively provided on the surface, such that the doping effect may not be sufficient, the oxide comprising the doping metal and the coating transition metal may not be readily formed in the coating layer, and the amount of the unreacted coating transition metal compound may increase, such that the coating transition metal compound may be simply mixed with the composite particle or may exhibit a form in which the coating transition metal compound is non-uniformly coated on the surface of the composite particle.

The heat treatment may be performed at 300 to 500°C for 2 to 10 hours, and, for example, may be performed at 350 to 500°C or 350 to 450°C for 2 to 8 hours or 2 to 6 hours. By performing the heat treatment at a temperature within the above range, a coating layer comprising the oxide of the doping metal and the coating transition metal may be formed on the surface of the composite particle.

The coating layer covering the surface of the composite particle is characterized by comprising the oxide of the doping metal and the coating transition metal, and the oxide of the doping metal and the coating transition metal may be the same as described above.

The prepared composite particle having the coating layer formed thereon may be further subjected to washing, filtration, and drying processes.

Another embodiment of the present invention provides a positive electrode for a sodium secondary battery, comprising the positive electrode active material, and a sodium secondary battery.

The positive electrode comprises a positive electrode current collector and a positive electrode active material layer located on the positive electrode current collector, and the positive electrode active material according to one aspect of the present invention is present in the positive electrode active material layer.

The positive electrode current collector is not particularly limited as long as it has conductivity without causing a chemical change in the battery, and, for example, stainless steel, aluminum, nickel, titanium, calcined carbon, or aluminum or stainless steel having a surface treated with carbon, nickel, titanium, silver, or the like may be used. In addition, the positive electrode current collector may typically have a thickness of 3 to 500 µm, and fine irregularities may be formed on the surface of the current collector to increase adhesion of the positive electrode active material. The positive electrode current collector may be provided in various forms such as a film, sheet, foil, net, porous body, foam, nonwoven fabric body, and the like.

In addition, the positive electrode active material layer may be a layer comprising a conductive material and a binder together with the above-described positive electrode active material.

Herein, the conductive material is used for imparting conductivity to an electrode and may be used without particular limitation as long as it has conductivity without causing a chemical change in the positive electrode active material. A non-limiting example of the conductive material may include graphites such as natural graphite or artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whisker such as zinc oxide and potassium titanate; conductive metal oxides such as titanium oxide; conductive polymers such as a polyphenylene derivative; or the like. The conductive material may be included in an amount of 1 wt% to 30 wt%, based on the total weight of the positive electrode active material layer.

In addition, the binder may serve to improve adhesion between positive electrode active material particles and adhesive strength between the positive electrode active material and the current collector. A non-limiting example of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), fluorine rubber, various copolymers thereof, or the like. The binder may be included in an amount of 1 wt% to 30 wt%, based on the total weight of the positive electrode active material layer.

The positive electrode according to one embodiment of the present invention may be produced according to a common method for producing a positive electrode for a sodium secondary battery, except for using the positive electrode active material described above. For example, a slurry for forming a positive electrode active material layer, including the positive electrode active material and optionally the binder and the conductive material, may be applied onto a positive electrode current collector, followed by drying and rolling, thereby producing a positive electrode. According to another exemplary embodiment, the slurry for forming a positive electrode active material layer may be cast on a separate support, and a film obtained by peeling the positive electrode active material layer from the support may be laminated on the positive electrode current collector, thereby producing the positive electrode.

According to another aspect of the present invention, an electrochemical device including the positive electrode is provided. Herein, the electrochemical device may be, specifically, a battery, a capacitor, and the like, and more specifically, a sodium secondary battery.

The sodium secondary battery includes a positive electrode, a negative electrode placed to face the positive electrode, a separator interposed between the positive electrode and the negative electrode, and an electrolyte (electrolytic solution). In addition, the sodium secondary battery may include a battery container (case) which stores an electrode assembly including the positive electrode, the negative electrode, and the separator, and a sealing member for sealing the battery container.

Herein, the sodium secondary battery may be classified into a can-type sodium secondary battery in which the electrode assembly is built into a metal can and a pouch-type sodium secondary battery in which the electrode assembly is built into a pouch formed of a sheet such as an aluminum laminate, depending on the shape of the battery container (case).

In particular, in the case of the pouch-type sodium secondary battery using the positive electrode including the positive electrode active material according to various exemplary embodiments of the present invention, since a possibility of a side reaction between the positive electrode active material and the electrolytic solution is low, there is an advantage in that stability during storage and/or operation may be improved and gas generation may be reduced.

Hereinafter, the present invention will be described in detail by the following Examples. However, the following Examples are provided only for describing the present invention in more detail, and the scope of the present invention is not limited thereto.

### Examples

### (Example 1)

A sodium compound, Na2CO3, was added to a Ni0.33Fe0.33Mn0.33(OH)2 precursor in an amount of Na/M (M=Ni+Fe+Mn)=1.0 equivalent, and a doping metal compound, Ca(OH)2, was added in an amount of Ca/M (M=Ni+Fe+Mn)=0.02 equivalent (2 mol%), followed by heat treatment at 900°C for 10 hours in an air atmosphere to obtain sodium composite transition metal oxide particle powder (Na_{0.98}Ca_{0.02}[Ni_{0.33}Fe_{0.33}Mn_{0.33}O₂] powder).

A coating transition metal compound, Co₃O₄, was added to the prepared sodium composite transition metal oxide particles in an amount of Co/M (M=Ni+Fe+Mn)=0.005 equivalent (0.5 mol%), and dry-mixed using a hand mixer. The prepared mixture was placed in an alumina crucible, calcined at 400°C for 4 hours in an air atmosphere, and then cooled to room temperature to prepare a positive electrode active material having a coating layer formed thereon.

A positive electrode slurry was prepared by dispersing 85 wt% of the prepared positive electrode active material, 10 wt% carbon black, and 5 wt% PVdF binder in 30 g of N-methyl-2-pyrrolidone (NMP). The positive electrode slurry was uniformly coated on an aluminum foil having a thickness of 15 µm and vacuum-dried at 135°C to prepare a positive electrode for a sodium secondary battery.

With respect to the positive electrode, a sodium metal plate was used as a counter electrode, porous glass fiber (thickness: 200 µm) was used as a separator, and an electrolyte in which NaPF₆ was present at a concentration of 1.0 M in a solvent obtained by mixing propylene carbonate and fluoroethylene carbonate at a volume ratio of 98:2 was used to prepare a sodium secondary battery (coin cell).

### (Examples 2 to 5)

Positive electrode active materials, positive electrodes, and sodium secondary batteries were prepared in the same manner as in Example 1, except that the amount of the coating transition metal compound added was changed as shown in Table 1 below.

### (Comparative Example 1)

Positive electrode active materials, positive electrodes, and sodium secondary batteries were prepared in the same manner as in Example 1, except that Co₃O₄ was used instead of Ca(OH)₂ as the doping metal compound, and Ca(OH)₂ was used instead of Co₃O₄ as the coating transition metal compound. Here, the amounts of Ca(OH)₂ and Co₃O₄ used were the same as the amounts added in Example 1.

### (Comparative Example 2)

Positive electrode active materials, positive electrodes, and sodium secondary batteries were prepared in the same manner as in Example 1, except that no doping metal compound was used, and Ca(OH)₂ and Co₃O₄ were simultaneously used as the coating transition metal compounds. Here, the amounts of Ca(OH)₂ and Co₃O₄ used were the same as the amounts added in Example 1.

### Experimental Examples

### Experimental Example 1: SEM-EDS Analysis and X-ray Diffraction Analysis of Ca-Doped Sodium Composite Transition Metal Oxide Particles

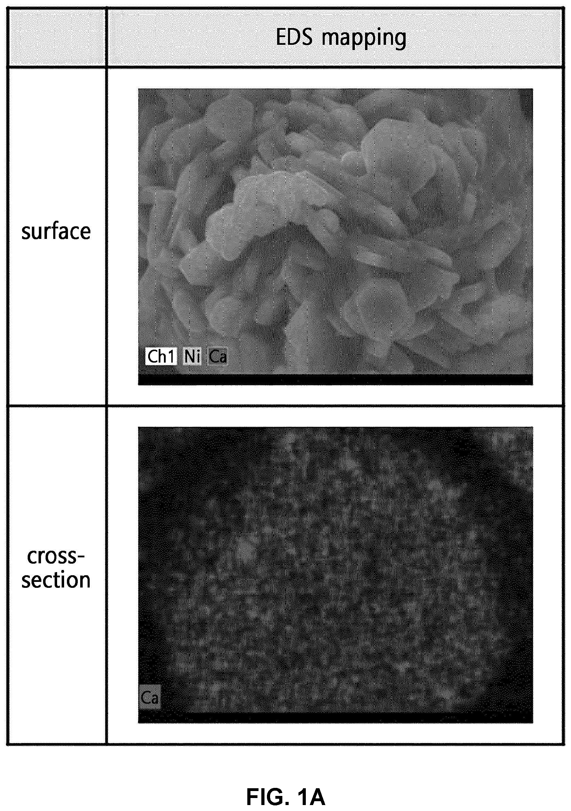

The results of SEM-EDS (Scanning Electron Microscope-Energy Dispersive X-ray Spectroscopy) analysis of the particle surface and cross-section of the sodium composite transition metal oxide prepared in Example 1 are shown in FIG. 1A.

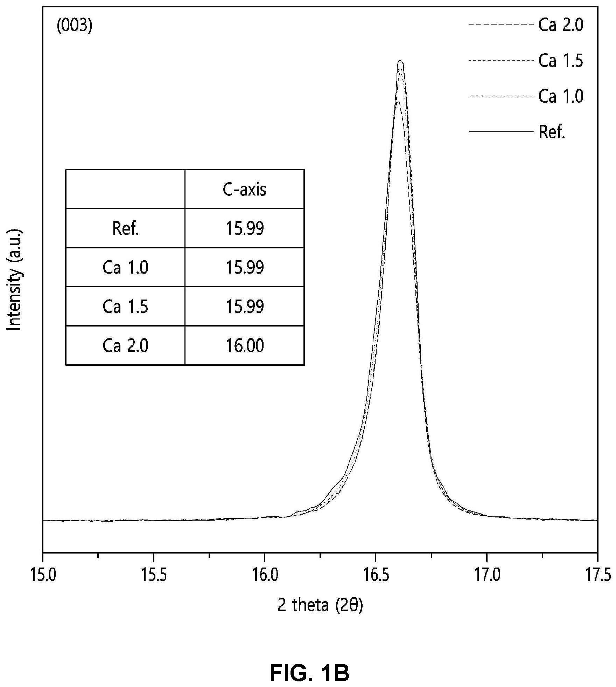

In addition, sodium composite transition metal oxides of Example 1, Examples 1-1 and 1-2, and Ref were prepared in the same manner as in Example 1, except that the doping metal compound, Ca(OH)₂, was used at Ca/M (M=Ni+Fe+Mn)=2 mol%, 1.5 mol%, 1 mol%, and 0 mol%, respectively. The peak intensity analysis results derived from the (003) plane by XRD analysis of the prepared sodium composite transition metal oxides are shown in FIG. 1B.

As shown in FIGS. 1A and 1B, since Na⁺ and Ca²⁺ have similar ionic radii and no change in the c-axis length of the (003) plane was observed by XRD analysis after Ca doping, it was confirmed that Ca partially substitutes Na sites in the crystal lattice of the sodium composite transition metal oxide. In addition, CaCO₃ was analyzed to be formed on the surface of the sodium composite transition metal oxide.

### Experimental Example 2: SEM-EDS Analysis of the Positive Electrode Active Material

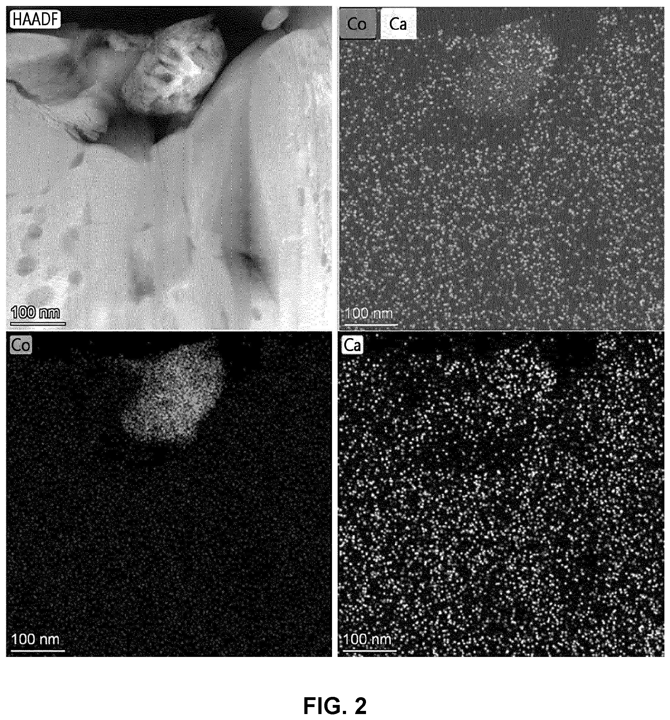

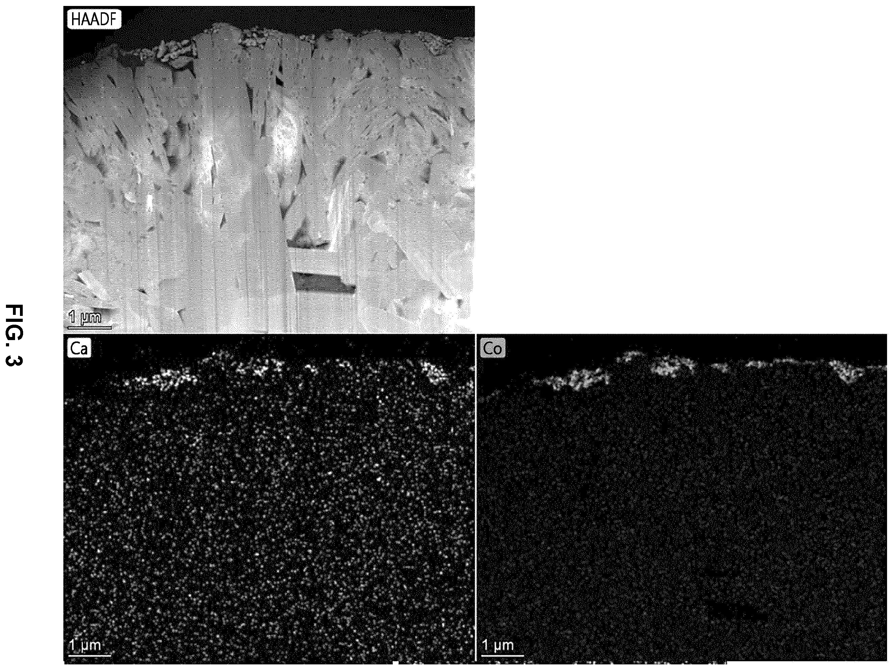

FIGS. 2 and 3 show the SEM-EDS analysis results of the surfaces of the positive electrode active materials prepared in Examples 1 and 3.

As shown in FIGS. 2 and 3, it was confirmed that a coating layer covering the surface of the prepared composite particle positive electrode active material was formed, and that Co and Ca were included in the coating layer.

Specifically, even when the Co coating amount was increased from 0.5 mol% to 2 mol% in Example 3 compared to Example 1, it was confirmed that Co was distributed only in the coating layer and did not diffuse into the interior of the composite particle of the positive electrode active material, while Ca was uniformly distributed in the interior and on the surface of the composite particle and was distributed at a high concentration in the coating layer.

### Experimental Example 3: EDS Line Scan (Co, Ca) Analysis

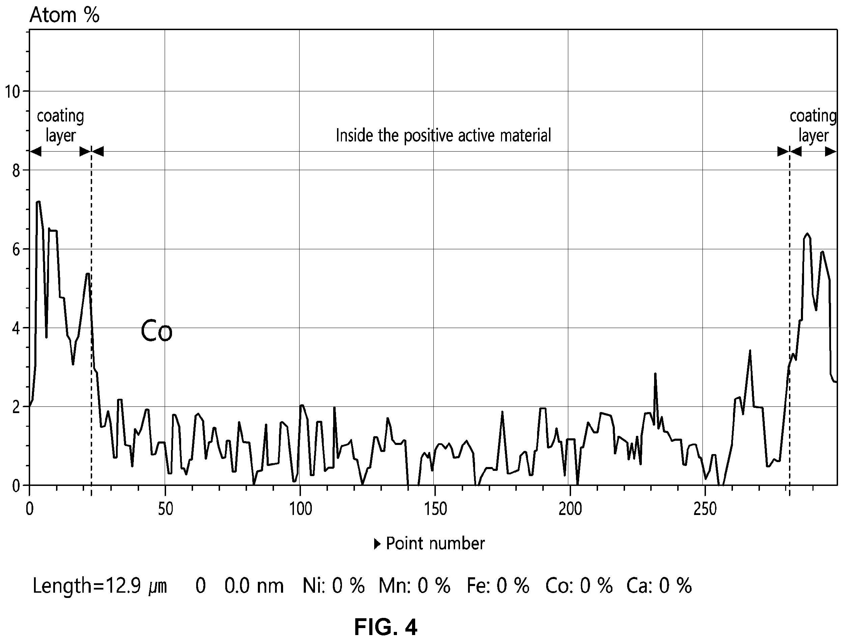

The cross-sectional EDS line scan Co analysis results of the positive electrode active material prepared in Example 1 are shown in FIG. 4. Specifically, the Co content (wt%) was measured at 30 arbitrary points based on a cross-section passing through the center of the positive electrode active material particle.

As shown in FIG. 4, it was confirmed that the positive electrode active material particle having the coating layer formed in Example 1 had a particle diameter of 12.9 µm and that a coating layer having a thickness of about 1 µm was formed on the surface.

In addition, cross-sectional EDS line scan analyses of Co and Ca were performed on the positive electrode active materials prepared in Examples 1 to 5 and Comparative Examples 1 and 2, and the results are shown in Table 1 below.

**[Table 1]**

| | Preparation Method | | Coating Layer Composition | Composition Inside Positive Electrode Active Material | |
|---|---|---|---|---|---|
| | Doping Metal / Doping Amount (mol%) | Coating Metal / Coating Amount (mol%) | Co : Ca (Weight Ratio) | Co (mol%) | Ca (mol%) |
| Example 1 | Ca / 2 | Co / 0.5 | 63 : 38 | 0 | 1.7 |
| Example 2 | Ca / 2 | Co / 1 | 70 : 30 | 0 | 1.57 |
| Example 3 | Ca / 2 | Co / 2 | 80 : 20 | 0 | 1.50 |
| Example 4 | Ca / 2 | Co / 0.1 | 54 : 46 | 0 | 1.92 |
| Example 5 | Ca / 2 | Co / 5 | 89 : 11 | 0 | 1.37 |
| Comparative Example 1 | Co / 0.5 | Ca / 2 | 0 : 100 | 0.5 | 0 |
| Comparative Example 2 | - | Co / 0.5 | 20 : 80 | 0 | 0 |
| | | Ca / 2 | | | |

Referring to Table 1, it was confirmed that, in the positive electrode active materials of the Examples, Co was distributed only in the coating layer and did not diffuse into the interior of the composite particle of the positive electrode active material, whereas Ca was uniformly distributed in the interior and on the surface of the composite particle and was distributed at a high concentration in the coating layer.

As in Comparative Example 1, when Co was doped and Ca was coated, it was analyzed that a Ca-Co-O compound was not synthesized because the reactivity between Co and Ca was low during the secondary heat treatment step for forming the coating layer.

In Comparative Example 2, Ca did not diffuse into the interior of the positive electrode active material during the secondary heat treatment step (coating temperature: 400°C), and accordingly, it is expected that the Ca doping effect would not occur.

Meanwhile, in Example 4, since the Co coating amount was low, a small amount of the Co-Ca coating layer was formed, and thus no improvement in ionic conductivity is expected, and the cycle life characteristics and rate capability are expected to deteriorate.

In addition, in Example 5, a large amount of the Co coating material was used, whereby an excessive coating layer was formed. The presence of the excessive coating layer may act as resistance during intercalation and deintercalation of Na ions, and a large amount of the doping metal (Ca) may migrate to the surface of the positive electrode, thereby reducing the doping effect. Accordingly, it is expected that it would be difficult to improve the cycle life characteristics and the rate capability.

### Experimental Example 4: X-ray Diffraction Analysis of the Positive Electrode Active Material

X-ray diffraction (XRD) analysis was performed on the positive electrode active materials prepared in Examples 1 to 5 and Comparative Examples 1 and 2. The peaks obtained from the XRD analysis were deconvoluted to determine the peak area A(Ca₃Co₄O₉) corresponding to Ca₃Co₄O₉ (2θ=37.34±0.5°), the peak area A(Co₃O₄) corresponding to Co₃O₄ (2θ=36.82±0.5°), and the peak area A(CaCo₃) corresponding to CaCO₃ (2θ=29.40±0.5°), and the peak area ratios A(Co₃O₄)/A(Ca₃Co₄O₉) and A(CaCo₃)/A(Ca₃Co₄O₉) were calculated. The results are shown in Table 3 below.

**[Table 2]**

| Compound | Space Group | Crystal Structure | XRD Peak Diffraction Angle |
|---|---|---|---|
| Ca₃Co₄O₉ | P2 | Monoclinic | 37.34 ° |
| Co₃O₄ | Fd-3m | Cubic | 36.82 ° |
| CaCO₃ | 32/m | Trigonal | 29.40 ° |

**[Table 3]**

| | Coating Layer Composition | |
|---|---|---|
| | A(Co₃O₄)/A(Ca₃Co₄O₉) Peak Area Ratio | A(CaCo₃)/A(Ca₃Co₄O₉) Peak Area Ratio |
| Example 1 | 0.91 | 0.90 |
| Example 2 | 1.08 | 0.71 |
| Example 3 | 0.96 | 0.52 |
| Example 4 | 1.01 | 1.66 |
| Example 5 | 0.66 | 0.40 |
| Comparative Example 1 | - | - |
| Comparative Example 2 | - | - |

Referring to Table 3, it was confirmed that, in Examples 1 to 5, as the Co coating amount increased, the reaction between the coating transition metal (Co) and the doping metal (Ca) was promoted on the surface of the positive electrode active material, thereby suppressing the formation of the CaCo₃ phase.

However, in Example 5, the presence of an excessive Co coating layer may act as resistance during intercalation and deintercalation of Na ions, and a large amount of the doping metal (Ca) may migrate to the surface of the positive electrode. Therefore, it is expected to be disadvantageous for improving the cycle life characteristics and the rate capability.

Referring to Examples 1 to 3, since the peak area ratio A(CaCo₃)/A(Ca₃Co₄O₉) showed excellent results in the range of 0.5 to 0.9, it is expected that the cycle life characteristics and the rate capability will be improved when the Co coating amount is 0.5 to 5 mol%.

Meanwhile, in Comparative Examples 1 and 2, no Ca₃Co₄O₉ peak was observed.

### Experimental Example 5: Electrochemical Performance Evaluation of the Sodium Secondary Battery

With respect to the sodium secondary batteries prepared in Examples 1 to 5 and Comparative Examples 1 and 2, charge-discharge tests were performed using an electrochemical analyzer (Toyo, Toscat-3100) at 25°C, within a voltage range of 2.2 V to 4.0 V, and at discharge rates of 0.1 C to 2.0 C, thereby measuring the initial charge capacity, initial discharge capacity, initial coulombic efficiency, and rate capability (discharge capacity ratio; rate capability (C-rate)).

In addition, with respect to the same sodium secondary batteries, charge-discharge cycling was performed 50 times under conditions of 0.5 C/0.5 C within an operating voltage range of 2.2 V to 4.0 V at 25°C, and the ratio of the discharge capacity at the 50th cycle to the initial capacity (cycle capacity retention) was measured. The measurement results are shown in Table 4 below.

**[Table 4]**

| | Initial Capacity Characteristics | | | Cycle life characteristics (50cy) (%) | Rate Capability (%) |
|---|---|---|---|---|---|
| | CH (mAh/g) | DCH (mAh/g) | ICE (%) | | |
| Example 1 | 150.6 | 139.4 | 92.5 | 97.1 | 89.7 |
| Example 2 | 148.4 | 138.4 | 93.3 | 95.6 | 87.4 |
| Example 3 | 147.2 | 138.5 | 94.1 | 95.3 | 86.5 |
| Example 4 | 150.2 | 137.9 | 91.8 | 89.1 | 75.1 |
| Example 5 | 145.1 | 138.4 | 95.4 | 88.0 | 76.3 |
| Comparative Example 1 | 148.3 | 126.7 | 85.5 | 83.2 | 76.4 |
| Comparative Example 2 | 147.4 | 137.4 | 95.1 | 87.5 | 74.8 |

As shown in Table 4, it was confirmed that the lithium secondary batteries comprising the positive electrode active materials according to the Examples of the present invention exhibited more improved cycle life characteristics and rate capability than those of the Comparative Examples. Accordingly, it was confirmed that using a positive electrode active material substituted with a doping metal and including an oxide of the coating transition metal and the doping metal in the coating layer is an effective method for improving cycle life characteristics and rate capability.

## Claims

1. A positive electrode active material for a sodium secondary battery, comprising:
a composite particle; and
a coating layer covering at least a portion of a surface of the composite particle,
wherein the composite particle comprises at least one transition metal selected from nickel, iron, and manganese, sodium, and a doping metal, and
wherein the coating layer comprises an oxide of a coating transition metal and the doping metal.

2. The positive electrode active material for a sodium secondary battery according to claim 1,
wherein the oxide of the coating transition metal and the doping metal is a compound represented by the following Chemical Formula 1:
[Chemical Formula 1] (Ca₃₋ₓ·Aₓ)(Co_{4-y}·B_{y})O₉
wherein, in Chemical Formula 1,
A is Na,
B is at least one transition metal element selected from Fe, Ni, and Mn, and
0≤x≤1 and 0≤y≤1.

3. The positive electrode active material for a sodium secondary battery according to claim 1,
wherein the coating layer further comprises an oxide (C2) of the coating transition metal and a carbonate (C3) of the doping metal,
wherein the oxide (C1) of the coating transition metal and the doping metal has a Monoclinic crystal structure belonging to the P2 space group,
wherein the oxide (C2) of the coating transition metal has a Cubic crystal structure belonging to the Fd-3m space group, and
wherein the carbonate (C3) of the doping metal has a Trigonal crystal structure belonging to the 32/m space group.

4. The positive electrode active material for a sodium secondary battery according to claim 1,
wherein the coating layer further comprises an oxide of the coating transition metal and a carbonate of the doping metal,
wherein a peak area ratio B/A, measured by X-ray diffraction analysis, is 0.7 to 1.3,
wherein A is a peak area of the oxide of the coating transition metal and the doping metal located at 2θ = 37.34 ± 0.5° in the X-ray diffraction analysis, and
wherein B is a peak area of the oxide of the coating transition metal located at 2θ = 36.82 ± 0.5° in the X-ray diffraction analysis.

5. The positive electrode active material for a sodium secondary battery according to claim 1,
wherein the coating layer further comprises an oxide of the coating transition metal and a carbonate of the doping metal,
wherein a peak area ratio C/A, measured by X-ray diffraction analysis, is 0.5 to 1.0,
wherein A is a peak area of the oxide of the coating transition metal and the doping metal located at 2θ = 37.34 ± 0.5° in the X-ray diffraction analysis, and
wherein C is a peak area of the carbonate of the doping metal located at 2θ = 29.40 ± 0.5° in the X-ray diffraction analysis.

6. The positive electrode active material for a sodium secondary battery according to claim 1,
wherein the doping metal is calcium and is substituted into a sodium layer of the composite particle, and
wherein the coating transition metal is cobalt and is substantially not diffused into the interior of the composite particle.

7. The positive electrode active material for a sodium secondary battery according to claim 1,
wherein the doping metal
is present throughout the composite particle including a center thereof and in the coating layer,
has a highest concentration in the coating layer, and
has a substantially uniform concentration throughout the composite particle including the center thereof.

8. The positive electrode active material for a sodium secondary battery according to claim 1,
wherein, based on the total weight of the doping metal,
the doping metal is present in an amount of 10 to 30 wt% in the coating layer, and
the doping metal is present in an amount of 70 to 90 wt% in the composite particle.

9. The positive electrode active material for a sodium secondary battery according to claim 1,
wherein the coating layer has a thickness of 0.05 µm to 1.5 µm.

10. The positive electrode active material for a sodium secondary battery according to claim 1,
wherein the composite particle is represented by the following Chemical Formula 2:
[Chemical Formula 2] Naₐ₋₂ₓCaₓ[(M_{y}TM_{1-y})]O₂
wherein, in Chemical Formula 2,
TM is at least one selected from Ni, Mn, and Fe,
M is at least one selected from P, Sr, Ba, Ti, Zr, Al, W, Ce, Hf, Ta, Cr, F, Mg, Cr, V, Fe, Zn, Si, Y, Ga, Sn, Mo, Ge, Nd, B, Nb, Gd, and Cu, $0.80 < a < 1.20 ,$ $0.001 \leq x \leq 0.1 ,$ $0 \leq y \leq 0.1 ,$ and $0.9 \leq 1 - y \leq 1 .$

11. A method for preparing a positive electrode active material for a sodium secondary battery, comprising:
preparing a composite particle by mixing a precursor of the composite particle, a doping metal compound, and a sodium compound, followed by heat treatment; and
forming a coating layer by mixing the prepared composite particle with a coating transition metal compound, followed by heat treatment,
wherein the coating layer comprises an oxide of the coating transition metal and the doping metal.

12. The method for preparing a positive electrode active material for a sodium secondary battery according to claim 11,
wherein, in the forming of the coating layer, the heat treatment is performed at 300°C to 500°C for 2 to 10 hours.

13. A positive electrode for a sodium secondary battery, comprising the positive electrode active material according to claim 1.

14. A sodium secondary battery using the positive electrode according to claim 13.
